# EUROPÄISCHE PATENTSCHRIFT

(11) **EP 2 832 664 B1**
(45) Veröffentlichungstag und Bekanntmachung des Hinweises auf die Patenterteilung: **24.08.2016**
(21) Anmeldenummer: 13178302.9
(22) Anmeldetag: 29.07.2013
(51) Int. Cl.: B65D 85/46, B65G 49/06, B65D 85/48, E04G 21/16

(54) **Lagervorrichtung für einen plattenförmigen Gegenstand**
Storing device for a plate-like article
Dispositif de stockage pour un objet en forme de plaque

(43) Veröffentlichungstag der Anmeldung: 04.02.2015
(73) Patentinhaber: ERNE AG Holzbau, 5080 Laufenburg (CH)
(72) Erfinder: Wehrle, Thomas, 5080 Laufenburg (CH); Muff, Markus, 5080 Laufenburg (CH)
(74) Vertreter: Herrmann, Johanna

(56) Entgegenhaltungen:
- DE-A1- 3 802 972
- DE-A1- 10 010 325
- DE-U1- 9 313 114

## Beschreibung

Die vorliegende Anmeldung bezieht sich auf eine Lagervorrichtung, welche zum Lagern und Transport von grossflächigen Gegenständen eingesetzt werden kann. Insbesondere handelt es sich um einen Lagerbock und/oder Transportbock für die Lagerung und den Transport grossflächiger Gegenstände, wie beispielsweise Wände.

Verschiedene Transportböcke für den Transport grossflächiger Gegenstände sind bereits vorgeschlagen worden, insbesondere für Glasplatten, wie beispielsweise in der US7264126 B1 gezeigt ist. Ein derartiger Transportbock besteht üblicherweise aus einer Basis und einer Gerüstkonstruktion. Die Gerüstkonstruktion dient als Auflage für den Gegenstand. Wie in der US7264126 B1, der DE9313114U, die eine Lagervorrichtung gemäß dem Oberbegriff des Anspruchs 1 offenbart, oder der DE 1001 0325 A1
gezeigt ist, hat die Gerüstkonstruktion einen A-förmigen Querschnitt und bildet in Bezug auf die Basis ein dreieckförmiges Prisma aus. Die Länge des Prismas entspricht dabei im Wesentlichen der Länge des Gegenstandes. Die Basis des dreieckförmigen Prismas wird durch den A-förmigen Querschnitt gebildet. Diese Gerüstkonstruktion wird für Glasplatten verwendet, die auf diese Weise kippsicher gelagert werden können, was für den Transport von Wichtigkeit ist. Insbesondere verbleiben die schweren Glasplatten in ihrer geneigten Position, auch wenn das Transportfahrzeug eine kurvenreiche Strecke befahren muss.

Für den Transport von plattenförmigen, grossflächigen Gegenständen, wie Wandteilen ist es auch bekannt, eine Gerüstkonstruktion einzusetzen, die sich in vertikaler Richtung von einer horizontalen Basis aus erstreckt, in Fachkreisen auch als T-Transportbock bezeichnet. Der T-Transportbock hat gegenüber dem A-Transportbock den Vorteil, dass der Platzbedarf für die Ladung verringert ist. Allerdings gestaltet sich die Transportsicherung aufwändiger. Insbesondere bei Gegenständen, die eine Höhe von mehr als 1 m aufweisen, muss die Transportsicherung gewährleisten, dass ein Kippen der Ladung auch bei unerwarteten Bremsvorgängen oder Kurvenfahrten ausgeschlossen werden kann. Daher muss die Transportsicherung nicht nur ein entlang der Seiten verlaufendes Transportband oder ähnliches umfassen, sondern auch eine Transportsicherung für die obere Kante.

Aufgabe der Erfindung ist es, eine Lagervorrichtung für die Lagerung und/oder den Transport von grossflächigen Gegenständen, wie Plattenelementen bereitzustellen, die für Montage, Demontage oder Transportsicherung sicher über ihre gesamte Höhe zugänglich ist. Insbesondere ist die Vorrichtung für Plattenelemente mit einer Länge von bis zu 10 m und/oder einer Höhe von über 2 m geeignet.

Diese Aufgabe wird mittels einer Vorrichtung nach Anspruch 1 gelöst. Die Unteransprüche 2-15 betreffen vorteilhafte Ausgestaltungen der Erfindung.

Eine Lagervorrichtung für grossflächige plattenförmige Gegenstände, insbesondere Wandelemente umfasst ein Basiselement, ein erstes Trägerelement und zweites Trägerelement, wobei sich das erste Trägerelement und das zweite Trägerelement in eine Höhendimension erstrecken. Das Basiselement ist derart ausgebildet, dass es eine Bodenfläche ausbildet oder einschliesst. Zwischen dem ersten Trägerelement und dem zweiten Trägerelement ist ein Stützelement angeordnet. Jedes der ersten und zweiten Trägerelemente weist einen Trägerelementabschnitt auf, der über das Stützelement hinaus ragt, sodass zwischen den Trägerelementabschnitten und dem Stützelement ein begehbarer Gang ausgebildet ist.

Über den begehbaren Gang erhält der Mitarbeiter, der für die Sicherung der Ladung zuständig ist, Zugang zu dem Lastelement und kann Transportsicherungsmittel ohne Absturzgefahr anbringen oder lösen. Daher benötigt der Mitarbeiter keine Sicherungsmittel, insbesondere keine Seilsicherung. Zudem kann sich der Mitarbeiter durch den Wegfall der Sicherung freier bewegen und die Sicherung der Lastelemente präziser und schneller durchführen.

Der Trägerelementabschnitt sowie das Geländer können auch zur Lagerung und Sicherung der Lastelemente verwendet werden. Daher ermöglicht die Lagervorrichtung auch den Transport und die Lagerung von unterschiedlichen plattenförmigen Gegenständen. Diese plattenförmigen Gegenstände können unterschiedliche Abmessungen aufweisen, können mehrteilig ausgebildet sein und Ausnehmungen oder Hohlräume enthalten. Beispielsweise können Wandelementen mit Ausnehmungen für Fenster oder Türen gemeinsam mit Wandelementen gestapelt werden, die keine derartigen Ausnehmungen aufweisen.

Zumindest das erste Trägerelement enthält zumindest ein erstes und ein zweites Profilelement und zumindest ein Verbindungselement welches eine Verbindung zwischen dem ersten und zweiten Profilelement ausbildet. Alternativ oder ergänzend hierzu enthält das zweite Trägerelement zumindest ein erstes und ein zweites Profilelement und zumindest ein Verbindungselement welches eine Verbindung zwischen dem ersten und zweiten Profilelement ausbildet. Diese Variante ist eine Leichtbaukonstruktion und ermöglicht die Einsparung von Konstruktionsmaterialien. Zudem können die Profilelemente auch dazu dienen Sicherungsmittel aufzunehmen. Wenn ein Trägerelement aus einer Mehrzahl von Profilelementen besteht, können auch Zwischensicherungen angebracht werden. Diese Massnahme kann sinnvoll sein, wenn Lastelemente unterschiedlicher Abmessungen nebeneinander oder hintereinander gestapelt werden sollen.

Das Verbindungselement kann als Auflager für die Lauffläche dienen. Somit hat das Verbindungselement nicht nur die Funktion, die Position der Trägerelemente zueinander festzulegen und die Rahmenkonstruktion zu stabilisieren, sondern auch eine tragende Funktion. Für die Lauffläche sind gemäss dieses Ausführungsbeispiels keine weiteren Stützträger erforderlich.

Der Winkel zwischen dem Trägerelement und dem Basiselement auf der Ladeseite beträgt mindestens 75°, vorzugsweise mindestens 90°. Insbesondere können durch die Wahl des Winkels die plattenförmigen Gegenstände zumindest annähernd in der Position gelagert werden, die der Einbauposition entspricht. Hierdurch ist es möglich eine grössere Anzahl Lastelemente auf der Lagervorrichtung zu lagern oder zu transportieren.

Der Winkel, den der Trägerelementabschnitt mit dem entsprechenden Verbindungselement einschliesst, beträgt nach einem Ausführungsbeispiel im Wesentlichen 90°. Der Trägerelementabschnitt enthält zumindest ein Geländer.

Die Trägerelementabschnitte werden in dieser Anordnung als Pfosten für ein Geländer gebraucht. Insbesondere kann ein Profilelement als Geländer eingesetzt werden, wodurch sich eine einfache und kostengünstige Lösung ergibt, indem das Profilelement durch übliche Verbindungsmittel mit dem Ende des Trägerelementabschnitts verbunden wird.

Nach einem Ausführungsbeispiel ist das erste Trägerelement parallel zum zweiten Trägerelement angeordnet. Diese Anordnung ist besonders platzsparend, da die Trägerelemente sich im Wesentlichen in vertikaler Richtung erstrecken. Hierdurch kann eine maximale Anzahl an Lastelementen, die plattenförmige Gegenstände umfassen platzsparend gestapelt werden.

Nach einem Ausführungsbeispiel ist eine Aufstiegshilfe vorgesehen, die einen Zugang zur Lauffläche ermöglicht. Die Aufstiegshilfe kann eine Mehrzahl von Sprossen umfassen, die an dem Trägerelement oder an den Trägerelementen angebracht sind. Die Aufstiegshilfe kann einseitig oder an beiden Seiten der Trägerelemente angebracht werden. Insbesondere kann die Aufstiegshilfe abnehmbar sein.

Nach einem Ausführungsbeispiel ist zumindest eines der Trägerelemente schwenkbar. Insbesondere kann das Trägerelement gemeinsam mit zumindest einem Teil des Basiselements schwenkbar sein. Insbesondere, wenn das erste Trägerelement im Be- oder Entladezustand parallel zum zweiten Trägerelement angeordnet ist, kann zumindest eines der Trägerelemente um eine entlang der Bodenfläche in Richtung der Breitenabmessung BB des Basiselements verlaufenden Schwenkachse derart geschwenkt werden, dass die oberen Enden der Trägerelemente oder die darauf angebrachten Geländer in Berührung kommen. Der Winkel, den das aus der Vertikalen verschwenkte Trägerelement mit dem Basiselement auf der Lastseite einschliesst, ist in diesem Fall grösser als 90°. Das heisst, dass das Lastelement in einem spitzen Winkel zur Bodenfläche angeordnet ist, wodurch sich die Stabilität des Lastelements gegen ein Kippen nach aussen, also vom Trägerelement weg, beträchtlich erhöht.
Insbesondere kann für dieses Ausführungsbeispiel das Stützelement schwenkbar oder entfernbar sein.

Das Basiselement weist nach einem Ausführungsbeispiel ein Verstellelement auf, sodass das Basiselement höhenverstellbar ist.

Insbesondere kann das Verstellelement ein Einschubelement aufweisen, welches in einem korrespondierenden Aufnahmeelement des Basiselements (2) aufnehmbar ist.

Vorteilhafterweise weist das Aufnahmeelement einen Querschnitt auf, der passend zum Querschnitt des Einschubelements ausgestaltet ist. Hierdurch wird eine einfache Steckverbindung erzeugt, die so lange eine sichere Auflage bietet, solange sie unter Last steht. Sobald sich die Lagervorrichtung auf dem Transportfahrzeug befindet, wirken keine Gewichtskräfte mehr auf diese Steckverbindung. Daher kann das Aufnahmeelement einfach vom Basiselement getrennt werden.

Nach einem Ausführungsbeispiel umfasst das Basiselement eine Mehrzahl von Profilelementen. Insbesondere, wenn die Lastelemente Längen von mehr als drei Metern umfassen und ein entsprechendes Eigengewicht aufweisen, ist es vorteilhaft, das Basiselement zu stabilisieren, damit es nicht zu Unebenheiten durch Biegung in unzulässigem Ausmass kommt, wodurch sich Unebenheiten in der Auflage der Lastelemente ergeben könnten.
Zumindest ein Teil der Profilelemente kann zumindest an einem Ende als Aufnahmeelement ausgebildet sein. Insbesondere können die Profilelemente, welche das Basiselement ausbilden als Hohlprofil ausgebildet sein, welche ein Ende des Aufnahmeelements aufnehmen oder in einem Ende des Aufnahmeelements aufgenommen werden können.

Das Verfahren zum Beladen einer Lagervorrichtung nach einem der vorhergehenden Ausführungsbeispiele umfasst die Schritte:
Bereitstellen eines Lastelements mit einer Hebevorrichtung,
Positionieren des Lastelements auf der Lastseite des ersten Trägerelements, Positionieren eines weiteren Lastelements auf der Lastseite des zweiten Trägerelements Sichern jedes der Lastelemente von der Lauffläche aus.

Insbesondere kann eines der Trägerelemente gegen das andere Trägerelement nach der Sicherung der Lastelemente verschwenkt werden. Nach einer Variante kann vor dem Beladen der Lagervorrichtung ein Justieren der Höhe des Basiselements mittels einem Verstellelement erfolgen.

Die Erfindung wird nachfolgend anhand von in den Zeichnungen dargelegten Ausführungsbeispielen näher erläutert. Diese zeigen:
Fig. 1 eine Prinzipskizze einer ersten vorbekannten Lösung
Fig. 2 eine Prinzipskizze einer zweiten vorbekannten Lösung
Fig. 3a eine Prinzipskizze eines ersten Ausführungsbeispiels der Erfindung
Fig. 3b eine Prinzipskizze einer Variante des ersten Ausführungsbeispiels
Fig. 4a eine Prinzipskizze eines zweiten Ausführungsbeispiels der Erfindung
Fig. 4b eine Prinzipskizze eines dritten Ausführungsbeispiels der Erfindung
Fig. 4c eine Prinzipskizze eines vierten Ausführungsbeispiels der Erfindung
Fig. 4d eine Prinzipskizze eines fünften Ausführungsbeispiels der Erfindung
Fig. 4e eine Prinzipskizze eines sechsten Ausführungsbeispiels der Erfindung
Fig. 4f eine Prinzipskizze eines siebenten Ausführungsbeispiels der Erfindung in der Transportposition
Fig. 4g eine Prinzipskizze des siebenten Ausführungsbeispiels der Erfindung in der Be- oder Entladeposition
Fig. 5 die Draufsicht auf ein achtes Ausführungsbeispiel der Erfindung
Fig. 6 eine Seitenansicht der in Fig. 5 dargestellten Ausführungsbeispiels
Fig. 7 eine weitere Seitenansicht im Winkel von 90° zur Seitenansicht der Fig. 5.
Fig. 8 eine Seitenansicht eines neunten Ausführungsbeispiels
Fig. 9 eine weitere Seitenansicht im Winkel von 90° zur Seitenansicht der Fig. 8.

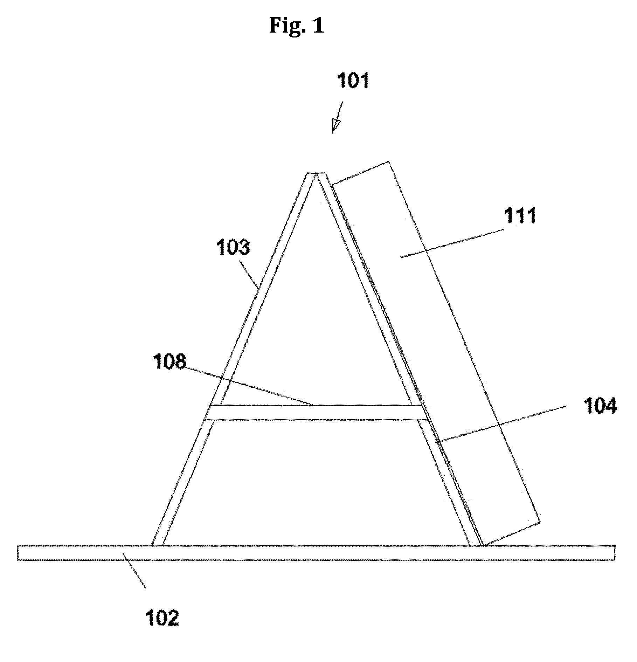

Fig. 1 zeigt eine vorbekannte Transportvorrichtung 101, welche ein Basiselement 102 sowie zwei Trägerelemente 103, 104 aufweist, welche die Form eines A ausbilden. Ein Stützelement 108 bildet eine Verstrebung zwischen den beiden die Schenkel des A ausbildenden Trägerelementen. Eine derartige Transportvorrichtung ist beispielsweise in der US 7 264 126 B1 beschrieben. Zu konstruktiven Details dieser vorbekannten Transportvorrichtung sei auf die genannte Schrift verwiesen. In Fig. 1 ist auch dargestellt, wie eine Last 111 auf der Transportvorrichtung positioniert wird. Die Last 111 kann beispielsweise eine oder mehrere Glasscheiben umfassen oder andere grossflächige Plattenelemente. Der Vorteil der Schrägstellung der Last liegt darin, dass sie während des Transportvorgangs nicht kippt, da eine Kraftkomponente der Gewichtskraft auf das Trägerelement wirkt. Nachteilig an dieser vorbekannten Transportvorrichtung ist der relativ grosse Platzbedarf.

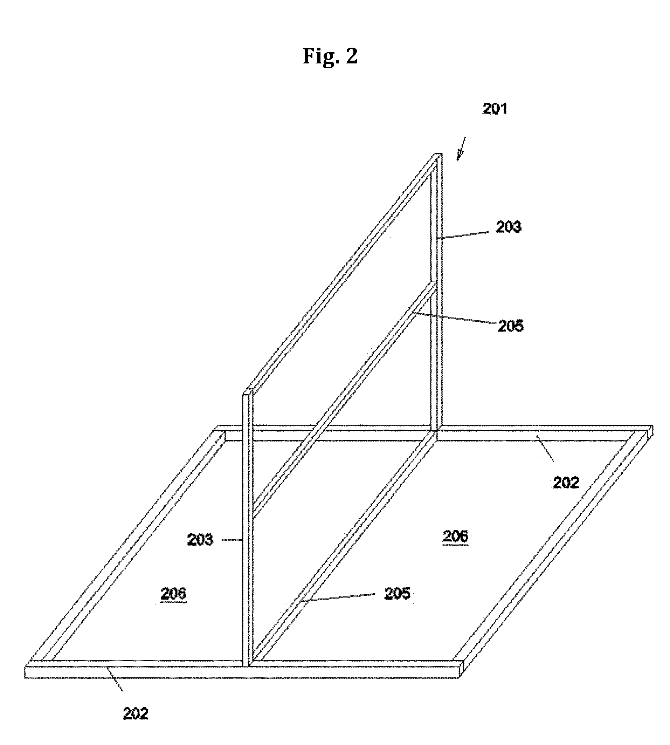

Fig. 2 zeigt eine weitere vorbekannte Transportvorrichtung 201, für welche der Platzbedarf gegenüber der in Fig. 1 dargestellten Transportvorrichtung 101 verringert ist. Die Transportvorrichtung 202 weist ein Basiselement 202 und ein einziges Trägerelement 203 auf, welches aus zwei Profilelementen besteht, die über drei Verbindungselemente 205 miteinander zu einer Rahmenkonstruktion verbunden sind. Basiselement 202 und Trägerelement 203 bilden eine T-förmige Einheit, wobei die beiden Schenkel des T von dem Basiselement 202 gebildet werden und dessen Stammelement von dem Trägerelement 203 gebildet ist. Das Trägerelement 203 erstreckt sich in vertikaler Richtung von der durch das Basiselement 202 begrenzten Bodenfläche 206. Diese Transportvorrichtung weist den Nachteil auf, dass die vertikal angestellten Lasten, wenn es sich um dünnwandige Plattenelemente handelt, leicht kippen, wenn sie nicht entsprechend gesichert sind. Daher wurde diese Lösung bisher für Glasplatten nicht eingesetzt und für Wandelemente bedarf es einer zusätzlichen Sicherung am äusseren Rand des Basiselements, wie es in der WO2008/068512 A1 gezeigt ist.

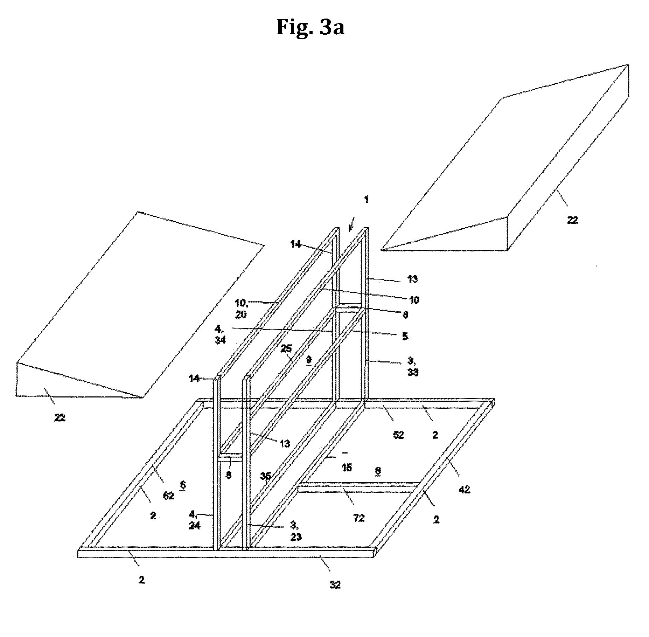

Fig. 3a zeigt ein erstes Ausführungsbeispiel der Erfindung. Die Lagervorrichtung 1 für grossflächige plattenförmige Gegenstände, insbesondere Wandelemente, umfasst ein Basiselement 2, ein erstes Trägerelement 3 und zweites Trägerelement 4. Das Basiselement 2 kann als eine Rahmenkonstruktion 12 ausgeführt sein, die von mehreren Profilelementen 32, 42, 52, 62 gebildet wird. Zusätzlich kann die Rahmenkonstruktion durch ein Profilelement 72 versteift werden. Je nach den Gesamtabmessungen der zu lagernden oder transportierenden Lasten können eine Mehrzahl derartiger Profilelemente 72 vorgesehen sein, die sich zwischen je zwei gegenüberliegenden Profilelementen erstrecken oder zwischen einem Profilelement und Stützelement 8 erstrecken, beispielsweise das in Fig. 3a gezeigte Profilelement 72.

Diese Rahmenkonstruktion 12 spannt eine Bodenfläche 6 auf. Nach einem weiteren zeichnerisch nicht dargestellten Ausführungsbeispiel kann das Basiselement 2 als ein Plattenelement ausgeführt sein. Das Basiselement 2 ist derart ausgebildet, dass es eine Bodenfläche 6 ausbildet oder einschliesst. Wenn das Basiselement als Plattenelement ausgebildet ist, bildet es die Bodenfläche 6 aus. Wenn das Basiselement als Rahmenkonstruktion 12 ausgebildet ist, kann zusätzlich ein Plattenelement 22 auf diese Rahmenkonstruktion 12 aufgelegt werden. Insbesondere kann das Plattenelement 22 eine Keilform haben, wobei die Höhe des Keils mit zunehmendem Abstand vom Trägerelement zunimmt. Ein derartiges Plattenelement ist in Fig. 3a nach der Art einer Explosionszeichnung im Abstand von der Rahmenkonstruktion 12 gezeigt, liegt aber im Betriebszustand auf der Rahmenkonstruktion 12 auf. Wenn das Plattenelement 22 eine Keilform aufweist, wird der grossflächige plattenförmige Gegenstand, welcher die Last ausbildet, durch den Keil in einem Winkel zum Trägerelement 3, 4 angestellt. Hierdurch wird der plattenförmige Gegenstand gegen ein Kippen nach aussen, also weg vom Trägerelement, gesichert.

Das erste Trägerelement 3 und das zweite Trägerelement 4 erstrecken sich in eine Höhendimension. Das heisst, dass die Trägerelemente 3 und 4 auf dem Basiselement 2 verankert sind. Diese Verankerung kann mittels üblichen Verbindungsmitteln entweder dauerhaft oder demontierbar ausgestaltet sein. Die Trägerelemente 3, 4 können ebenfalls als Profilelemente, beispielsweise als Hohlprofile, C-Profile I-Profile, T-Profile, als Vollprofile, beispielsweise Balken, insbesondere Holzbalken ausgebildet sein. Die Trägerelemente 3, 4 können auch als je ein Wandelement ausgestaltet sein.

Insbesondere kann das erste Trägerelement 3 ein erstes Profilelement 23, mindestens ein Verbindungselement 5, 15 und ein zweites Profilelement 33 enthalten, wobei das Verbindungselement eine Verbindung zwischen den ersten und zweiten Profilelement 23, 33 ausbildet. Insbesondere kann das zweite Trägerelement 4 ein erstes Profilelement 24, mindestens ein Verbindungselement 25, 35 und ein zweites Profilelement 34 enthalten, wobei das Verbindungselement 25, 35 eine Verbindung zwischen den ersten und zweiten Profilelement 24, 34 ausbildet.

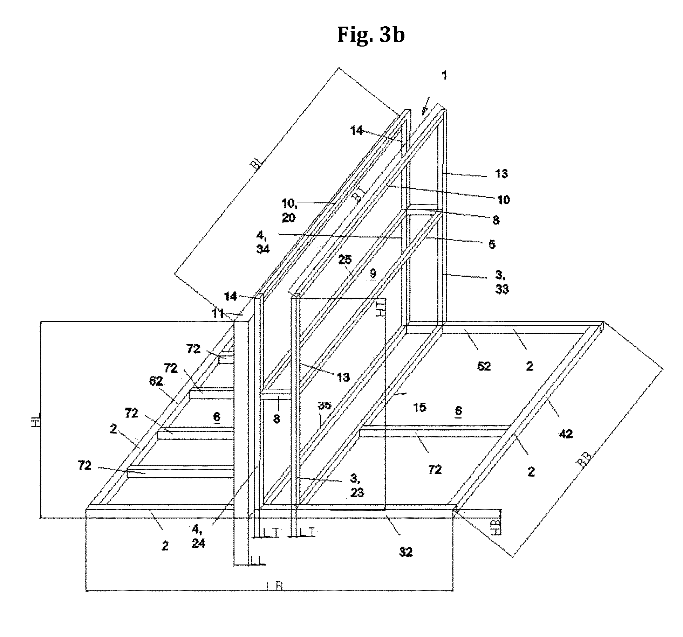

Die Trägerelemente 3, 4 sind in Bezug auf das Lastelement 11 hintereinander angeordnet, was in Fig. 3b dargestellt ist. Das heisst, wenn man von dem Lastelement 11, das an dem zweiten Trägerelement 4 angelehnt ist, in Richtung des ersten Trägerelements 3 blickt, ist das erste Trägerelement 3 weiter entfernt von dem Lastelement als das zweite Trägerelement 4. Das heisst, nur eines der Trägerelemente 3 oder 4, hier das zweite Trägerelement dient der Unterstützung des Lastelements, welches entlang einer Breitseite des zweiten Trägerelements 4 an das zweite Trägerelement 4 angelehnt wird. Bei dem Lastelement 11 handelt es sich um einen plattenförmigen Gegenstand, wie beispielsweise eine Wand. Derartige Wände können Längen von bis zu 25 m und Höhen von bis zu 5 m haben. Das erste Trägerelement 3 dient der Aufnahme des Lastelements, welches entlang einer Breitseite des ersten Trägerelements 3 angelehnt wird, wobei die Breitseite die Seite des ersten Trägerelements 3 ist, die von dem zweiten Trägerelement 4 abgewandt ist.

Das Basiselement 2 weist eine Längsabmessung LB und eine Breitenabmessung BB auf, die wesentlich grösser als die Höhenabmessung HB ist. Das Basiselement kann wie vorhin beschrieben aus mehreren Teilelementen, wie beispielsweise Profilelementen zusammengesetzt sein. Das erste Trägerelement 3 und das zweite Trägerelement 4 weisen eine Längsabmessung LT, eine Querabmessung BT und eine Höhenabmessung HT auf. Die Längsabmessung LT jedes der Trägerelemente 3,4 ist wesentlich kleiner als die Längsabmessung LB des Basiselements 2. Somit können die beiden Trägerelemente 3,4 nebeneinander auf dem Basiselement 2 angeordnet werden. Das erste Trägerelement und das zweite Trägerelement können insbesondere parallel zueinander auf dem Basiselement 2 angeordnet sein. Die Querabmessung BT jedes Trägerelements entspricht vorteilhafterweise im Wesentlichen der Breitenabmessung BB des Basiselements.

Das erste Trägerelement 3 bildet mit einer ersten Teilfläche der Bodenfläche 2 eine erste Auflagefläche für ein erstes Lastelement 11 aus. Das heisst, das Lastelement wird an der Auflagefläche des Trägerelements angelehnt oder an die Auflagefläche des Trägerelements angestellt und ruht mit der Schmalseite auf der Auflagefläche der Bodenfläche. Als Schmalseite wird die Auflagefläche bezeichnet, die durch die Dickenabmessung und entweder die Längsabmessung oder die Querabmessung des Lastelements gebildet wird. Das Lastelement ist insbesondere als ein Plattenelement ausgebildet. Die Längsabmessung des Lastelements wird mit LL, die Querabmessung des Lastelements mit BL und die Dickenabmessung oder Höhenabmessung des Lastelements HL bezeichnet.

Gemäss des Ausführungsbeispiels in Fig. 3b bildet das zweite Trägerelement 4 mit einer zweiten Teilfläche der Bodenfläche 2 eine zweite Auflagefläche für ein Lastelement 11 aus. Dieses Lastelement 11 ist vorteilhafterweise ein plattenförmiger Gegenstand, beispielsweise ein Plattenelement für eine Wand, ein Bodenelement, ein Deckenelement oder ein Dachelement mit einer Längsabmessung LL, einer Querabmessung BL und einer Höhenabmessung HL.

Daher kann sowohl die Auflagefläche linksseitig des ersten Trägerelements 3 (bezogen auf die Darstellung in Fig. 3b) sowie rechtsseitig des zweiten Trägerelements 4 mit mindestens einem Lastelement beladen werden. Selbstverständlich kann jedes der Lastelemente 11 aus mehreren Plattenelementen bestehen.

Insbesondere kann zumindest eine der Teilflächen des Trägerelements 3, 4 vertikal ausgerichtet sein. Das heisst, der Winkel zwischen dem Trägerelement und der Bodenfläche beträgt 90°. Hierdurch wird die Ladefläche optimal ausgenutzt und eine maximale Anzahl an Plattenelementen kann auf einer derartigen Lagervorrichtung gelagert und mit entsprechender Transportsicherung gesichert werden.

Zwischen dem ersten Trägerelement 3 und dem zweiten Trägerelement 4 ist ein Stützelement 8 angeordnet, wobei das Stützelement 8 oberhalb des Basiselements 2 angeordnet ist. Das Stützelement 8 kann als Querbalken ausgebildet sein und dient der Stabilisierung des ersten und zweiten Trägerelements 3, 4, indem es deren Position zueinander festlegt. Durch das Stützelement 8 wird jedes der zwei Trägerelemente 3,4 in zwei Teile unterteilt. Der obere Teil des Trägerelements soll in der Folge als Trägerelementabschnitt 13, 14 bezeichnet werden, um ihn vom gesamten Trägerelement 3, 4 abzugrenzen. Es ist hierbei nicht ausgeschlossen, dass der obere Teil des Trägerelements und der untere Teil des Trägerelements Teil desselben Profilelements oder Wandelements sind. Somit weist jedes der Trägerelemente 3,4 einen Trägerelementabschnitt 13, 14 auf, der über das Stützelement 8 hinaus ragt, sodass zwischen den Trägerelementabschnitten 13, 14 und dem Stützelement 8 ein begehbarer Gang ausgebildet ist.

Durch diesen begehbaren Gang ist es möglich, das Lastelement vom Gang aus für die Lagerung oder den Transport zu sichern. Insbesondere können Transportsicherungsmittel, wie beispielsweise Seile, Gurten, Fixierungselemente und dergleichen auf der Oberseite des Lastelements befestigt werden. Hierdurch ist das Lastelement gegen Kippen gesichert und stabil für den Transport gelagert.

Die Lagervorrichtung wird gemeinsam mit dem Lastelement oder den Lastelementen auf ein Transportfahrzeug verladen. Sowohl beim Beladen, beim Entladen wie auch während des Transports kann es zum Kippen des Lastelements kommen, wenn es nicht gesichert ist.

Bisher mussten die Lastelemente derart gesichert werden, dass eine Person mit einer Leiter entsprechende Transportsicherungsmittel anbringen musste. Wenn die Arbeitshöhe über 2m beträgt, ist es erforderlich, dass die Person bei dieser Tätigkeit gesichert, das heisst, z.B. angeseilt ist. Die Personensicherung ist zeitraubend und verlängert den Be- und Entladevorgang, was zu erhöhten Kosten führt. Durch den erfindungsgemässen Gang entfällt die Notwendigkeit der Personensicherung. Die Person, welche die Be- oder Entladung der Lagervorrichtung 1 vornimmt, begibt sich zur Sicherung oder Entsicherung der Ladung auf die Lauffläche 9 und bringt die entsprechenden Transportsicherungsmittel an oder löst sie beim Entladen. Die Lauffläche 9 ist seitlich mit einem Geländer 10 versehen, welches gleichzeitig als Auflage für ein Lastelement dienen kann. Durch das Geländer ist die Person gegen den Sturz aus grösserer Höhe gesichert. Hierdurch entfällt der Schritt des An- und Abseilens, sodass der Be- und Entladevorgang schneller abgewickelt werden kann.

Der Winkel zwischen dem Trägerelement 3, 4 und dem Basiselement 2 beträgt auf der Ladeseite mindestens 75°, vorzugsweise mindestens 90°. Hierbei wird ein Basiselement 2 mit einer im Wesentlichen horizontalen Oberfläche angenommen. Ist das Basiselement als eine aus Profilelementen bestehende oder eine Profilelemente enthaltende Unterlage, wird als dessen Oberfläche die Fläche angesehen, auf welcher das Lastelement ruht.
Als Ladeseite wird die Seite des Trägerelements bezeichnet, auf der sich im beladenen Zustand das Lastelement befindet. Je grösser der Winkel zwischen dem Trägerelement und dem Basiselement 2 ausgebildet ist, desto stabiler wird der Aufbau, welcher die Trägerelemente 3,4 und das Verbindungselement 5 enthält.

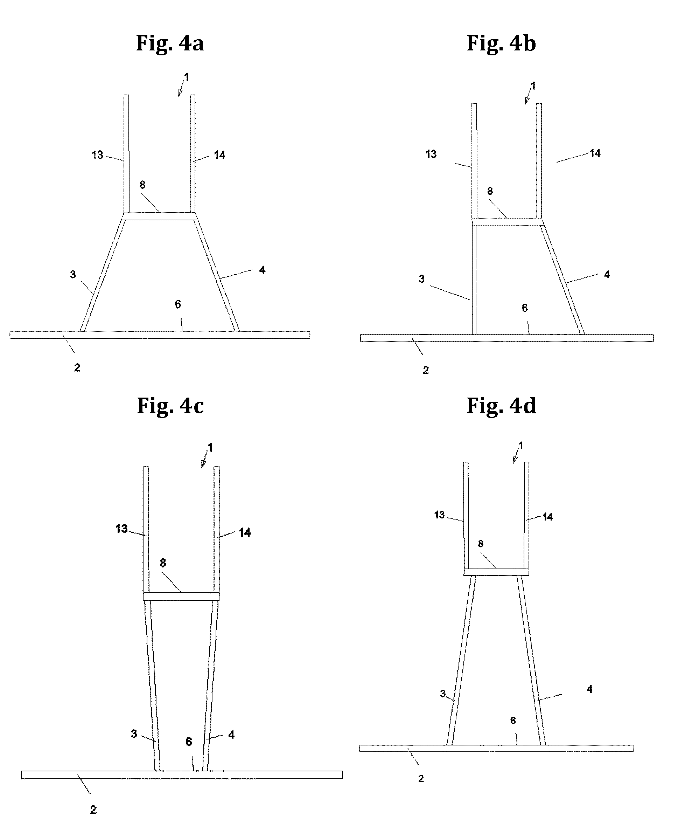

Wenn der Winkel als stumpfer Winkel ausgebildet ist, bilden die Trägerelemente 3,4 eine Lagervorrichtung aus, wie sie in Fig. 4a gezeigt ist. Fig. 4a ist ein zweites Ausführungsbeispiel der Erfindung. An der Stelle, an der sich das Stützelement 8 befindet, bilden die Trägerelemente 3, 4 einen Knickpunkt aus. Die Trägerelementabschnitte 13, 14 erstrecken sich in vertikaler Richtung, das heisst in einem Winkel von 90° zu dem hier horizontal verlaufenden Stützelement 8. Wie in den vorhergehenden Ausführungsbeispielen insbesondere dem Ausführungsbeispiel gemäss Fig. 3a und der Variante des ersten Ausführungsbeispiels gemäss Fig. 3b kann das Stützelement 8 bzw. hier nicht gezeigte Verbindungselemente eine Auflage für eine Lauffläche 9 sein, die entlang der Querabmessung BT des Trägerelements 3,4 verläuft.

Die Trägerelementabschnitte 13, 14 dienen auch als Pfosten für ein Geländer 10, welches am oberen Ende der Trägerelementabschnitte verläuft, aber in der vereinfachten Darstellung der Fig. 4a zeichnerisch nicht dargestellt ist.

Die Winkel, den die Trägerelemente 3,4 mit der Bodenfläche 6 einschliessen, können auch unterschiedlich sein. Gemäss eines dritten Ausführungsbeispiels der Erfindung, das in Fig. 4b dargestellt ist, schliesst nur das Trägerelement 4 einen stumpfen Winkel mit der Bodenfläche 6 bzw. des die Bodenfläche 6 aufspannenden Basiselements 2 ein. Gemäss eines vierten Ausführungsbeispiels der Erfindung, welches in Fig. 4c dargestellt ist, kann auch ein kleinerer Winkel zwischen mindestens einem Trägerelement 3, 4 und der Bodenfläche 6 vorgesehen sein. Das heisst, der Winkel zwischen dem Basiselement 2, welches die Bodenfläche aufspannt und dem Trägerelement 3,4 auf der Lastseite, das heisst der Seite des Trägerelements, an welchem das Lastelement 11 angestellt oder angelehnt werden kann, beträgt weniger als 90°.

Im unteren, bodennahen Teilabschnitt der Trägerelemente ist eine Zugänglichkeit zum Lastelement nicht erforderlich. Daher kann der Abstand der beiden Trägerelemente im bodennahen Trägerelementabschnitt geringer sein, als es für einen begehbaren Gang erforderlich wäre. Durch den hierdurch geschaffenen zusätzlichen Raum kann auf der Lastseite mehr Staufläche für Kleinteile oder Profilelemente geschaffen werden. Die beiden oberen Trägerelementabschnitte 13, 14 sind in auf dem Stützelement 8 derart angeordnet, dass ein begehbarer Gang ausgebildet wird.

Fig. 4d zeigt eine weitere Optimierungsmöglichkeit für eine Anordnung von Trägerelementen 3,4 für eine Lagervorrichtung gemäss eines fünften Ausführungsbeispiels der Erfindung. Die Trägerelemente 3, 4 haben je einen unteren Trägerelementabschnitt und einen oberen Trägerelementabschnitt 13, 14. Der untere Trägerelementabschnitt ist derart auf der Bodenfläche 6 angeordnet, dass auf der Lastseite ein stumpfer Winkel zwischen dem die Bodenfläche ausbildenden Basiselement 2 und dem unteren Trägerelementabschnitt auf der Lastseite ausgebildet ist. Allerdings ist die Länge des Stützelements 8 grösser als der Abstand der oberen Enden der jeweils gegenüberliegenden unteren Trägerelementabschnitte zueinander in Richtung der Längsabmessung des Stützelements. Das heisst, die oberen Trägerelementabschnitte 13, 14 sind in Bezug auf die oberen Enden der unteren Trägerelementabschnitte nach aussen versetzt.
Ein Vorteil der in Fig. 4d dargestellten Anordnung besteht darin, dass der Platzbedarf für die Trägerelementkonstruktion verringert ist und somit auf der Lagervorrichtung eine grössere Anzahl Plattenelemente gelagert werden kann.

Um die Stabilität der Trägerelementkonstruktion zu erhöhen, können auch Trägerelemente gemäss einer der Fig. 4a, Fig. 4b,Fig. 4c und Fig. 4d miteinander kombiniert werden.

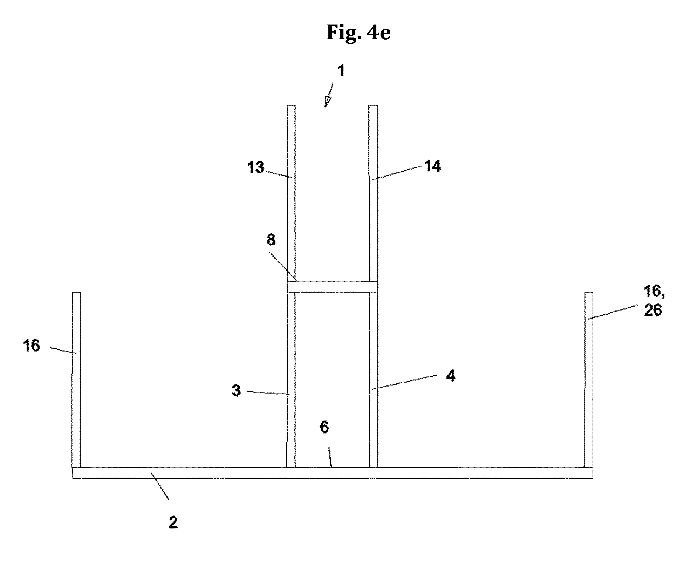

Fig. 4e zeigt ein sechstes Ausführungsbeispiel einer Lagervorrichtung, wie sie in Zusammenhang mit Fig. 3a oder Fig. 3b beschrieben worden ist. Gleiche Teile werden wie in den vorhergehenden Ausführungsbeispielen mit gleichen Bezugszeichen versehen. Zur Sicherung des oder der Lastelemente werden Sicherungselemente 16, 26 vorgesehen. Diese Sicherungselemente 16, 26 werden am Basiselement 2 angebracht. Sie erstrecken sich in vorzugsweise vertikaler Richtung. Die Sicherungselemente 16, 26 können abnehmbar oder einklappbar sein, sodass sie beim Be- oder Entladen der Lagervorrichtung 1 nicht in den Weg kommen. Die Sicherungselemente können beispielsweise als Stangen ausgebildet sein, die in entsprechende Halterungen des Basiselements 2 aufgenommen werden können.

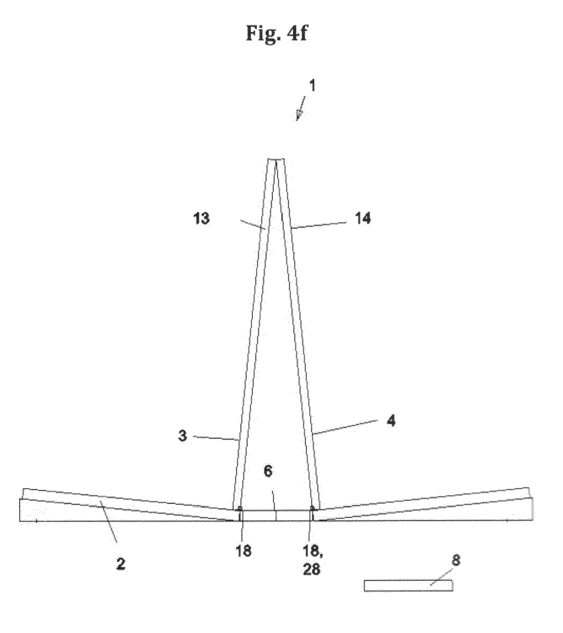

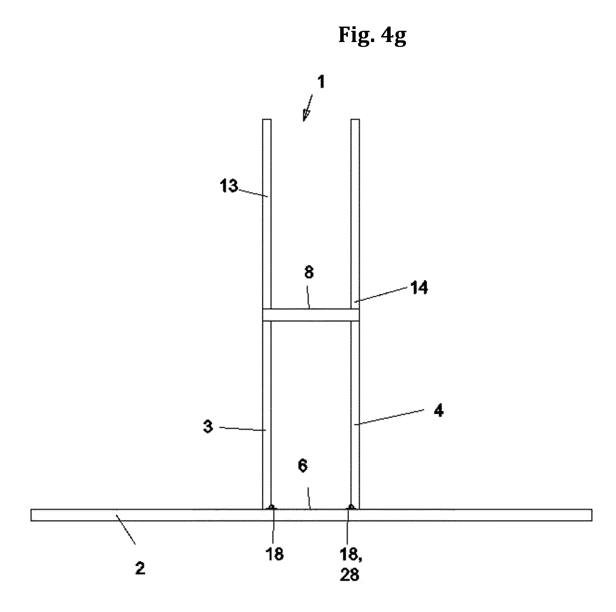

Fig. 4f und Fig. 4g zeigen ein siebentes Ausführungsbeispiel einer Lagervorrichtung. Diese Lagervorrichtung unterscheidet sich von den vorgehend beschriebenen Ausführungsbeispielen dahingehend, dass das Basiselement 2 und die Trägerelemente 3,4 zwei verschiedene Positionen, eine Transportposition sowie eine Be- oder Entladeposition zueinander einnehmen können. Fig. 4f zeigt die Transportposition, Fig. 4g die Be- und Entladeposition. Die Be- und Entladeposition entspricht der Anordnung wie sie in Fig. 3a oder Fig. 3b gezeigt ist.

Die Trägerelemente 3,4 und das Basiselement 2 sind von der Be- und Entladeposition in die Transportposition schwenkbar. Hierfür ist zumindest ein Kippelement 18, 28 vorgesehen, welches eine Kippbewegung der Trägerelemente 3,4 zueinander in Bezug auf die in Fig. 4g dargestellte Position und ein Kippen zumindest eines Teils des Basiselements 2 ermöglicht. Der Winkel zwischen den Trägerelementen 3,4 und dem mitbewegten Teil des Basiselements 2 bleibt erhalten, sodass es zu keiner Verschiebung der Lastelemente kommen kann, wenn die Lagervorrichtung von der Transportposition in eine Be- oder Entladeposition geschwenkt wird oder umgekehrt.

Die Kippelemente 18, 28 können als Scharnierelemente ausgebildet sein. Die Scharnierelemente erlauben ein Kippen von zumindest einem Teil des Basiselements um eine horizontale Achse, die parallel zur Breitenabmessung BB des Basiselements 2 verläuft. In der Darstellung gemäss Fig. 4g sind zwei Kippelemente 18, 28 vorgesehen.
Selbstverständlich kann auch nur ein Kippelement vorgesehen sein, welches die Längsabmessung LB des Basiselements bevorzugt in zwei Hälften teilt. Diese Variante ist zeichnerisch nicht dargestellt.

Um zu vermeiden, dass ein grosser Teil der Gewichtskraft der Lastelemente in der Transportposition in das Kippelement eingeleitet wird, können Keilelemente vorgesehen sein, die unter die hochgeschwenkten Teile des Basiselements 2 geschoben werden.

Es ist auch erforderlich, das Stützelement 8 zu entfernen, wenn das Trägerelement und das Basiselement in die Transportposition geschwenkt wird. Schematisch wird dies in Fig. 4f dargestellt, in welcher das Stützelement 8 als separates Einzelteil gezeigt ist. Eine andere Möglichkeit besteht darin, das Stützelement mit einem Schwenkmechanismus auszustatten, oder die Verbindung zwischen einem der Trägerelemente und dem Stützelement 8 zu lösen. Alternativ dazu kann das Stützelement ein Klappelement enthalten, was zeichnerisch nicht dargestellt ist.

Gemäss jeder der Fig. 4a bis Fig. 4g erstrecken sich die Trägerelemente 3,4 normal zur Zeichnungsebene und weisen eine Querabmessung QT auf, wie in Fig. 3b dargestellt ist. Das obere Ende jedes der Trägerelementabschnitte 13, 14 ist als ein Geländer ausgebildet. Wenn das erste Trägerelement 3 parallel zum zweiten Trägerelement 4 angeordnet ist, können die oberen Trägerelementabschnitte 13, 14 das Geländer ausbilden oder einzelne Pfostenelemente für das Geländer bilden.

Vom Basiselement 2 bis zu der Lauffläche 9 kann nach jedem der Ausführungsbeispiele mindestens eine Aufstiegshilfe angeordnet sein. Insbesondere kann die Aufstiegshilfe abnehmbar sein.

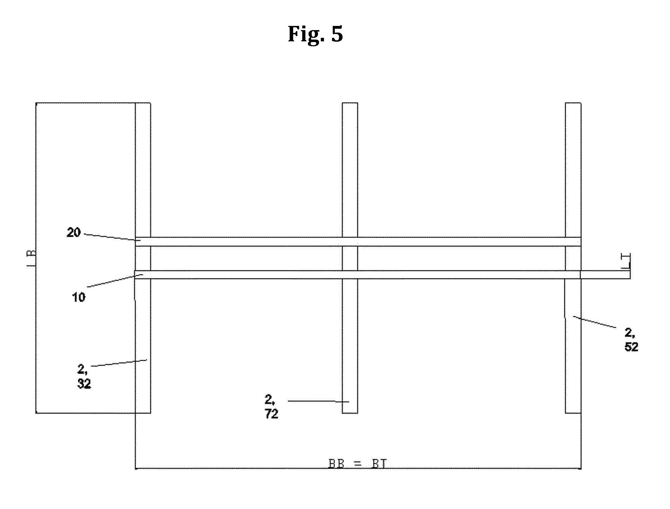

Fig. 5 zeigt ein achtes Ausführungsbeispiel der Erfindung. Die Lagervorrichtung ist hier in einer Ansicht von oben dargestellt. Drei Basiselemente 2 sind gezeigt, die eine Bodenfläche 6 aufspannen. Die Basiselemente 2 sind als Profilelemente ausgebildet. Von den Basiselementen erstrecken sich normal zur Zeichnungsebene erste und zweite Trägerelemente, die allerdings durch das Geländer 10 verdeckt sind und daher in dieser Ansicht unsichtbar bleiben.

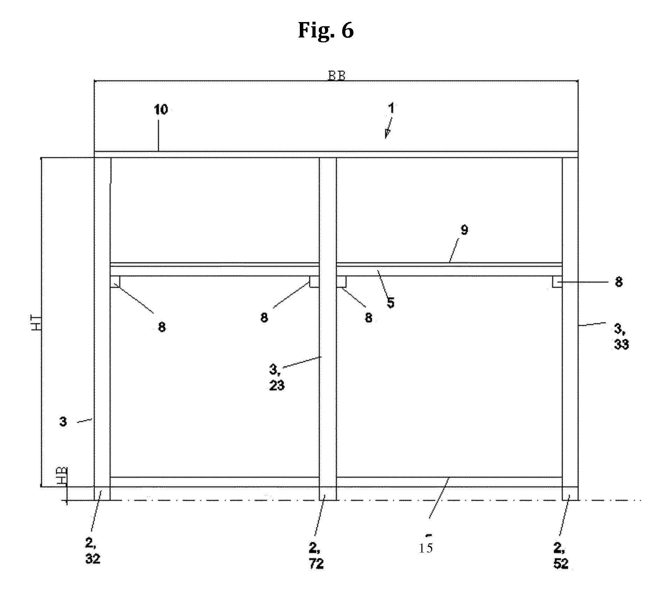

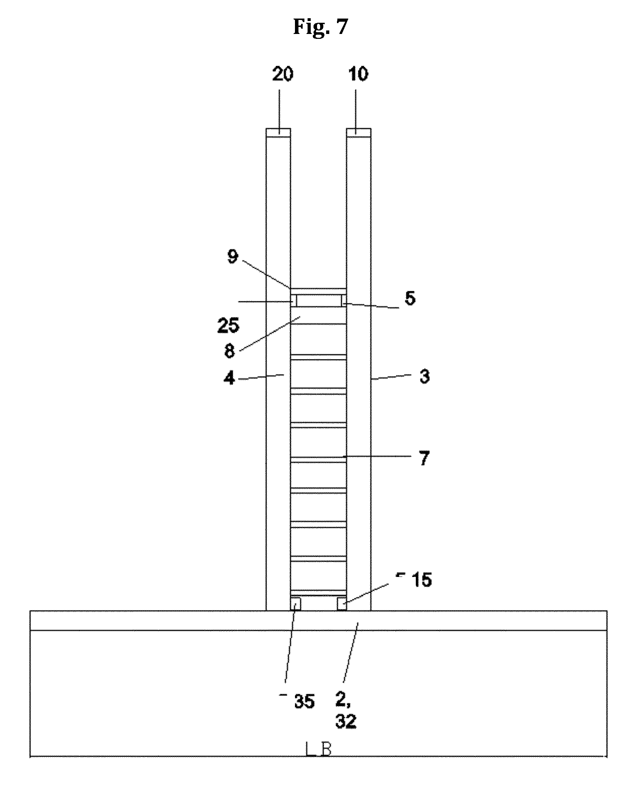

Fig. 6 ist eine Seitenansicht der in Fig. 5 dargestellten Ausführungsbeispiels, welche den Aufbau der Lagervorrichtung 1 zeigt, also die Trägerelemente 3, Verbindungselemente 5, 15, Stützelemente 8 sowie die auf den Verbindungselementen angeordnete Lauffläche 9 und das Geländer 10. Die Ansicht zeigt somit ein Basiselement 2, welches aus drei Profilelementen besteht. Die Breitenabmessung des Basiselements ist wie in Fig. 3b mit BB bezeichnet. Die Trägerelemente 3 und die dahinter liegenden, in dieser Ansicht nicht sichtbaren Trägerelemente 4 sind in einem rechten Winkel zum Basiselement 2 angeordnet. Die Trägerelemente 3, 4 bestehen aus je drei Profilelementen 3, 23, 33. Selbstverständlich kann die Anzahl und/oder der Abstand der Profilelemente voneinander variabel sein. Es wäre auch denkbar, dass jedes der Trägerelemente 3,4 aus einem einzigen plattenförmigen Element besteht. Die Profilelemente, welche entlang der Breitenabmessung BB des Basiselements aufspannen, sind durch Verbindungselemente 5, 15 miteinander verbunden. In dieser Darstellung sind nur die Verbindungselemente 5, 15 des ersten Trägerelements 3 gezeigt, die dahinterliegenden Verbindungselemente 25, 35 (siehe Fig. 3b) sind hier verdeckt. Die Verbindungselemente 5 liegen auf Stützelementen 8 auf. Die Stützelemente 8 verbinden benachbarte Trägerelemente 3, 4, was in Fig. 7 sichtbar ist. Fig. 7 zeigt eine weitere Seitenansicht im Winkel von 90° zur Seitenansicht der Fig. 6. In Fig. 7 sind die benachbarten Trägerelemente 3, 4 gezeigt, sowie eines der Stützelemente 8. Auf den Stützelementen 8 kommen die Verbindungselemente 5, 25 zu liegen. Sie dienen als Auflage für eine Lauffläche 9. Die Lauffläche 9 kann beispielsweise als ein Gitterrost ausgebildet sein oder auch eines oder mehrere Bretter umfassen. In Fig. 7 ist auch eine Aufstiegshilfe 7 sichtbar, welche den Zugang zu der Lauffläche ermöglicht. Die Aufstiegshilfe weist mehrere Sprossen auf. Zusätzlich kann ein Handlauf vorgesehen sein, der entlang zumindest eines der Trägerelemente verläuft. Der Handlauf ist zeichnerisch nicht dargestellt.
Zwischen den Profilelementen 3, 23, 33 des Trägerelements 3 und/oder den Profilelementen des Trägerelements 6 können zusätzliche Versteifungselemente vorgesehen sein. Des Weiteren können Versteifungselemente zwischen den Trägerelementen 3 und 4 vorgesehen sein. Die Versteifungselemente können parallel zu den Verbindungselementen oder Stützelementen verlaufen, ähnlich der Sprossen in Fig. 7. Sie können auch kreuzweise zueinander angeordnet sein und die Form eines X ausbilden. Des Weiteren können Spannelemente und andere Techniken eingesetzt werden, um die Stabilität der Lagervorrichtung zu erhöhen, die dem Fachmann bekannt sind. An deren oberen Enden werden die Profilelemente 3, 23, 33 jedes der Trägerelemente 3, 4 miteinander durch ein Geländer 10, 20 verbunden.

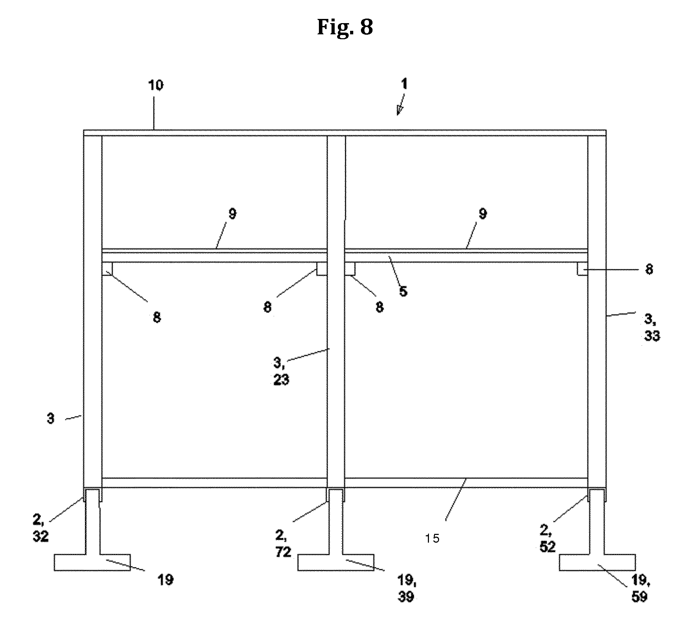

Fig. 8 zeigt eine Seitenansicht eines neunten Ausführungsbeispiels, welches sich vom Ausführungsbeispiel gemäss der Fig. 5 bis 8 dahingehend unterscheidet, dass das Basiselement ein Verstellelement 19 aufweist, sodass die Lagervorrichtung höhenverstellbar ist. Die Verwendung eines derartigen Verstellelements hat den Vorteil, dass die Lagervorrichtung im beladenen Zustand einfach auf ein Transportfahrzeug aufladbar ist. Das Transportfahrzeug weist üblicherweise eine ebene Ladefläche auf. Diese Ladefläche ist mit Rädern ausgestattet. Die Ladefläche wird zur Aufnahme der Lagervorrichtung unter das Basiselement 2 gefahren. Sobald das Basiselement 2 auf der Ladefläche des Transportfahrzeugs aufliegt, können die Verstellelemente entfernt werden.

Gemäss eines zeichnerisch nicht dargestellten Ausführungsbeispiels können die Verstellelemente in ihrer Höhe verstellbar sein. Damit entfällt die Notwendigkeit, die Verstellelemente auf eine Unterlage zu stellen, wenn das Transportfahrzeug eine grössere lichte Höhe benötigt oder wenn der Untergrund uneben ist.

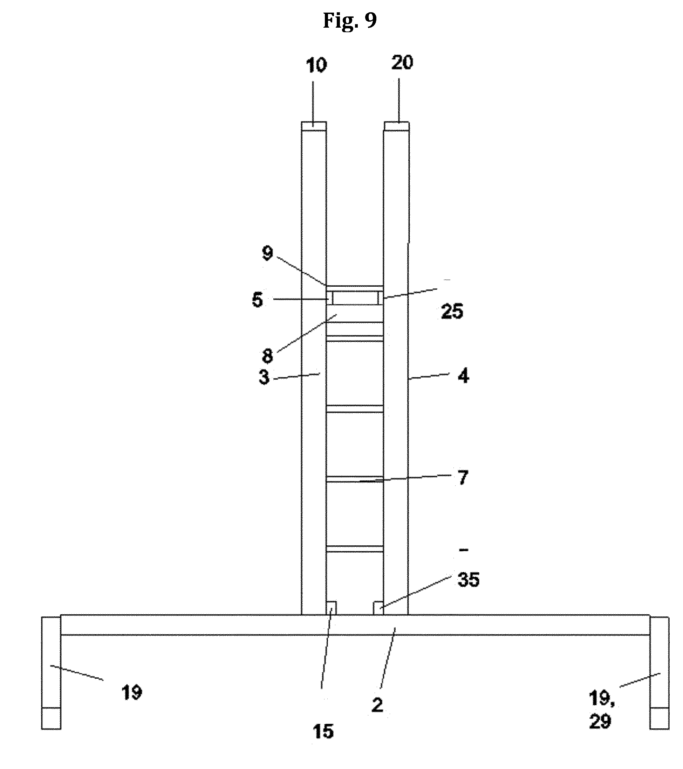

Fig. 9 eine weitere Seitenansicht einer Lagervorrichtung gemäss des neunten Ausführungsbeispiels im Winkel von 90° zur Seitenansicht der Fig. 8.

Das Verstellelement 19 weist ein Einschubelement auf, welches in einem korrespondierenden Aufnahmeelement des Basiselements aufnehmbar ist.
Das Einschubelement kann beispielsweise als ein Stutzen ausgebildet sein, der in ein Hohlprofil eingeschoben werden kann. Die Profilelemente 32, 72, 52 können zumindest an einem Ende als Aufnahmeelement ausgebildet sein, insbesondere ein Hohlprofil aufweisen. Das Aufnahmeelement kann auch als ein Rohrelement ausgebildet sein. Vorteilhafterweise weist das Aufnahmeelement einen Querschnitt auf, der passend zum Rohrelement ausgestaltet ist. Insbesondere kann das Rohrelement einen viereckigen Querschnitt haben.

Alternativ dazu kann das Einschubelement selbst ein Hohlprofil aufweisen, in welches ein Ende des Profilelements 32, 52, 72 des Basiselements 2 aufnehmbar ist.

## Patentansprüche

1. Lagervorrichtung (1) für grossflächige plattenförmige Gegenstände, insbesondere Wandelemente, umfassend ein Basiselement (2), ein erstes Trägerelement (3) und zweites Trägerelement (4), wobei sich das erste Trägerelement (3) und das zweite Trägerelement (4) in eine Höhendimension erstrecken, wobei das Basiselement (2) derart ausgebildet ist, dass es eine Bodenfläche (6) ausbildet oder einschliesst, wobei zwischen dem ersten Trägerelement (3) und dem zweiten Trägerelement (4) ein Stützelement (8) angeordnet ist, wobei jedes der ersten und zweiten Trägerelemente (3,4) einen Trägerelementabschnitt (13, 14) aufweist, der über das Stützelement (8) hinaus ragt, **dadurch gekennzeichnet, dass** zwischen den Trägerelementabschnitten (13, 14) und dem Stützelement (8) ein begehbarer Gang ausgebildet ist.

2. Vorrichtung nach Anspruch 1, wobei zumindest das erste Trägerelement (3, 4) zumindest ein erstes und ein zweites Profilelement (23, 33) enthält und zumindest ein Verbindungselement (5) welches eine Verbindung zwischen dem ersten und zweiten Profilelement (23, 33) ausbildet und/oder wobei zumindest das zweite Trägerelement (4) zumindest ein erstes und ein zweites Profilelement (24, 34) enthält und zumindest ein Verbindungselement (5) welches eine Verbindung zwischen dem ersten und zweiten Profilelement (24, 34) ausbildet.

3. Vorrichtung nach Anspruch 2, wobei das Verbindungselement (5) als Auflager für die Lauffläche (9) des begehbaren Gangs dient.

4. Vorrichtung nach einem der vorhergehenden Ansprüche, wobei der Winkel zwischen dem Trägerelement (3, 4) und dem Basiselement (2) auf der Ladeseite mindestens 75° beträgt, vorzugsweise mindestens 90° beträgt.

5. Vorrichtung nach einem der vorhergehenden Ansprüche, wobei der Winkel, den der Trägerelementabschnitt (13, 14) mit dem entsprechenden Verbindungselement (5) einschliesst, im Wesentlichen 90° beträgt.

6. Vorrichtung nach einem der vorhergehenden Ansprüche, wobei der Trägerelementabschnitt (13, 14) ein Geländer (10, 20) enthält.

7. Vorrichtung nach einem der vorhergehenden Ansprüche, wobei das erste Trägerelement (3) parallel zum zweiten Trägerelement (4) angeordnet ist.

8. Vorrichtung nach einem der vorhergehenden Ansprüche, wobei eine Aufstiegshilfe (7) vorgesehen ist, die einen Zugang zur Lauffläche (9) ermöglicht.

9. Vorrichtung nach einem der vorhergehenden Ansprüche, zumindest eines Trägerelemente (3, 4) schwenkbar ist.

10. Vorrichtung nach einem der vorhergehenden Ansprüche, wobei das Stützelement (8) schwenkbar oder entfernbar ist.

11. Vorrichtung nach einem der vorhergehenden Ansprüche, wobei das Basiselement (2) ein Verstellelement (19) aufweist, sodass das Basiselement (2) höhenverstellbar ist.

12. Vorrichtung nach Anspruch 11, wobei das Verstellelement (19) ein Einschubelement aufweist, welches in einem korrespondierenden Aufnahmeelement des Basiselements (2) aufnehmbar ist.

13. Vorrichtung nach Anspruch 12, wobei das Aufnahmeelement einen Querschnitt aufweist, der passend zum Querschnitt des Einschubelements ausgestaltet ist.

14. Vorrichtung nach einem der vorhergehenden Ansprüche, wobei das Basiselement (2) eine Mehrzahl von Profilelementen (32, 42, 52, 62, 72) umfasst.

15. Vorrichtung nach Anspruch 14, wobei zumindest ein Teil der Profilelemente (32, 42, 52, 62, 72) zumindest an einem Ende als Aufnahmeelement ausgebildet sind.

## Claims

1. A scaffold (1) for large-sized, plate-shaped objects in particular wall elements, including a base element (2) a first carrier element (3) and a second carrier element (4) whereby the first carrier element (3) and the second carrier support element (4) extend in an altitude dimension, whereby the base element (2) is configured such that it forms or includes a floor surface (6), whereby a support element (8) is arranged between the first carrier element (3) and the second carrier element (4), whereby each of the first and second carrier elements (3, 4) comprise a carrier element section (13, 14), which extends above the support element (8), **characterized in that** a walkable passage is formed between the carrier element sections (13, 14) and the support element (8).

2. The scaffold according to claim 1, whereby at least the first carrier element (3) comprises at least a first and second profile element (23, 33) and at least a connection element (5), which forms a connection between the first and second profile element (23, 33) and/or whereby at least the second carrier element (4) comprises at least a first and second profile element (24, 34) and at least a connection element (5) which forms a connection between the first and second profile element (24, 34).

3. The scaffold according to claim 2, whereby the connection element (5) is used as a support for the walking surface (9) of the walkable passage.

4. The scaffold according to any one of the preceding claims, whereby the angle between the carrier element (3, 4) and the base element (2) on the load side is at least 75°, preferably at least 90°.

5. The scaffold according to any one of the preceding claims, whereby the angle between the carrier element section (13, 14) and the corresponding connection element (5) is substantially 90°.

6. The scaffold according to any one of the preceding claims, whereby the carrier element section (13, 14) comprises a hand rail (10, 20).

7. The scaffold according to any one of the preceding claims, whereby the first carrier element (3) is arranged in parallel to the second carrier element (4).

8. The scaffold according to any one of the preceding claims, whereby an ascent aid (1) is provided for providing access to the walking area (9).

9. The scaffold according to any one of the preceding claims, whereby at least one of the carrier elements (3, 4) is pivotable.

10. The scaffold according to any one of the preceding claims, whereby the support element (8) is pivotable or removable.

11. The scaffold according to any one of the preceding claims, whereby the base element (2) comprises an adjustable element (19) such that the base element (2) is height adjustable.

12. The scaffold according to claim 11, whereby the adjustable element (19) comprises an insert element, which is receivable in a corresponding receiving element of the base element (2).

13. The scaffold according to claim 12, whereby the receiving element has a cross-section which is corresponding to the cross-section of the insert element.

14. The scaffold according to any one of the preceding claims, whereby the base element (2) comprises a plurality of profile elements (32, 42, 52, 62, 72).

15. The scaffold according to claim 14, whereby at least a portion of the profile elements (32, 42, 52, 62, 72) are configured at least on one end as a receiving element.

## Revendications

1. Un pupitre de stockage et de transport (1) pour des carreaux de grandes dimensions en particulier des éléments de paroi comprenant un élément de base (2), un premier élément porteur (3) et un deuxième élément porteur (4) autant que le premier élément porteur (3) et le deuxième élément porteur (4) s'étendent dans une dimension d'altitude, autant que l'élément de base (2) est configuré pour former une surface de fond (6) et un élément d'appui (8) est arrangé entre le premier élément porteur (3) et le deuxième élément porteur (4) autant que chacun des premiers éléments porteurs (3) et des deuxièmes éléments porteurs (4) comprennent une section d'élément porteur (13, 14) que s'étend au-dessus de l'élément d'appui, **caractérisé en ce qu'**un passage est formé entre les sections d' éléments porteurs (13, 14) et l'élément d'appui (8).

2. Le pupitre selon la revendication 1, alors que le premier élément porteur (3) comprend au moins un premier et un deuxième élément de profile (23, 33) et au moins un élément de connexion (5) que forme une connexion entre le premier et le deuxième élément de profile (23, 33) et/ou autant que le deuxième élément porteur (4) comprend au moins un premier et un deuxième élément de profile (24, 34) et au moins un élément de connexion (5) que forme une connexion entre le premier et le deuxième élément de profile (24, 34).

3. Le pupitre selon la revendication 2, alors que l'élément de connexion (5) sert de support pour le surface pédestre du passage (9).

4. Le pupitre selon une quelconque des revendications précédentes, alors que l'angle entre l'élément porteur (3, 4) et l'élément de base (2) sur la face de charge est au moins 75°, avantageusement au moins 90°.

5. Le pupitre selon une quelconque des revendications précédentes, alors que l'angle entre la section de l'élément porteur (13, 14) et l'élément de connexion (5) correspondent est environ 90°.

6. Le pupitre selon une quelconque des revendications précédentes, alors que la section de l'élément porteur (13, 14) comprend une balustrade (10, 20).

7. Le pupitre selon une quelconque des revendications précédentes, alors que le premier élément porteur (3) est disposé en arrangement parallèle avec le deuxième élément porteur (4).

8. Le pupitre selon une quelconque des revendications précédentes, alors qu'il y a une aide de montée (7) pour accéder au surface pédestre du passage (9).

9. Le pupitre selon une quelconque des revendications précédentes, alors qu'au moins un des éléments porteurs (3, 4) est pivotant.

10. Le pupitre selon une quelconque des revendications précédentes, alors que l'élément d'appui (8) est pivotant ou éliminable.

11. Le pupitre selon une quelconque des revendications précédentes, alors que l'élément de base (2) comprend un élément ajustable (19) autant que l'élément de base (2) est ajustable en hauteur.

12. Le pupitre selon la revendication 11, alors que l'élément ajustable (19) comprend un élément de débrochage, qui est reçu dans un élément de réception de l'élément de base (2).

13. Le pupitre selon la revendication 12, alors que l'élément de réception a une section transversale correspondante à la section de l'élément de débrochage.

14. Le pupitre selon une quelconque des revendications précédentes, alors que l'élément de base (2) comprend une pluralité des éléments de profile (32, 42, 52, 62, 72).

15. Le pupitre selon la revendication 14, alors qu'au moins une partie des éléments de profile (32, 42, 52, 62, 72) est configurée au moins sur un bout comme un élément de réception.
